**Europäisches Patentamt**

**European Patent Office**

**Office européen des brevets**

(11) Numéro de publication: **0 209 454**
**B1**

# (12) FASCICULE DE BREVET EUROPÉEN

(45) Date de publication du fascicule du brevet:
**15.02.89**

(21) Numéro de dépôt: **86401531.8**

(22) Date de dépôt: **09.07.86**

(51) Int. Cl.⁴: **B 65 D 53/02**

(54) **Perfectionnements apportés aux joints d'étanchéité pour bocaux de conserves ou récipients analogues, aux procédés et aux outillages mis en oeuvre pour leur fabrication.**

(30) Priorité: **17.07.85 FR 8510941**

(43) Date de publication de la demande:
**21.01.87 Bulletin 87/4**

(45) Mention de la délivrance du brevet:
**15.02.89 Bulletin 89/7**

(84) Etats contractants désignés:
**BE CH DE GB IT LI LU NL SE**

(56) Documents cité:
**FR-A-1 217 209**
**FR-A-2 120 312**
**US-A-2 091 913**
**US-A-3 264 393**
**US-A-3 527 859**
**US-A-3 703 421**

(73) Titulaire: **HUTCHINSON, 2 rue Balzac, F-75008 Paris (FR)**

(72) Inventeur: **Auberger, Claude, 189, rue E. Mengin, F-45000 Montargis (FR)**
Inventeur: **Michel, Claude, 31, rue P. Painlevé, F-45000 Montargis (FR)**
Inventeur: **Thomas, André, 16, rue de la quintaine, F-45000 Montargis (FR)**

(74) Mandataire: **Orès, Bernard, Cabinet ORES 6, Avenue de Messine, F-75008 Paris (FR)**

## Description

La présente invention est relative à des perfectionnements apportés aux joints qui assurent l'étanchéité entre le corps et le couvercle de bocaux de conserves ou récipients analogues, notamment de bocaux en verre.

Le principe de la stérilisation à domicile des produits alimentaires est bien connu et largement utilisé.

Les aliments à conserver sont placés dans un bocal en verre muni d'un couvercle. Une rondelle en caoutchouc, présentant en général une zone de préhension latérale appelée "nez" assure l'étanchéité entre le bocal et son couvercle.

Pendant la stérilisation l'air contenu dans le bocal en verre s'échappe sous l'effet de la surpression intérieure due à l'élévation de température. L'armature métallique qui assemble le bocal et son couvercle est toujours conçue de façon à présenter une élasticité suffisante pour ne pas s'opposer à cette évacuation d'air.

Après refroidissement, la pression atmosphérique qui appuie sur le couvercle n'est plus équilibrée par une pression interne de même valeur. Il en résulte que le couvercle comprime fortement la rondelle en caoutchouc, ce qui empêche tout retour d'air dans le bocal.

Cette méthode de conservation par stérilisation, tout comme la méthode de conservation sous vide d'ailleurs, produit une dépression à l'intérieur du récipient, tel que bocal. Le maintien du couvercle sur le récipient est assuré par la différence de pression entre l'extérieur qui se trouve à la pression atmosphérique et l'intérieur.

Pour ouvrir le bocal ou analogue en vue de la consommation de son contenu, il faut:

- soit créer un effort suffisant de séparation du couvercle et du corps en se servant de l'armature métallique comme d'un levier, pour appliquer sur le couvercle une force de séparation supérieure à la force créée par la pression atmosphérique appuyant sur le couvercle.
- soit faire pénétrer à l'intérieur du récipient la quantité d'air nécessaire pour rétablir l'équilibre entre les pressions interne et externe en arrachant la rondelle en caoutchouc sur une partie de la périphérie du couvercle.

Dans les deux cas cette opération d'ouverture a toujours présenté beaucoup de difficultés pour les ménagères.

En effet, dans le premier cas, la difficulté réside en ce que comme l'armature métallique doit présenter une élasticité suffisante pour ne pas s'opposer à la sortie de l'air pendant la stérilisation, ceci constitue une raison suffisante pour que cette même armature manque de rigidité quand on s'en sert comme levier pour soulever le couvercle maintenu fortement appuyé par la pression atmosphérique. On constate qu'effectivement l'armature se déforme progressivement à chaque ouverture et remplit de plus en plus mal son office de multiplicateur de force. La conséquence en est que rares sont les ménagères qui ont une force suffisante dans les mains pour ouvrir leurs bocaux par ce procédé.

Dans le second cas, en tirant fortement sur le nez de la rondelle en caoutchouc, on peut sortir vers l'extérieur une partie de cette rondelle et créer ainsi un passage d'air de l'extérieur vers l'intérieur du bocal. Dès que l'air a rempli le bocal pour rétablir dans celui-ci la pression atmosphérique, on peut aisément soulever le couvercle.

Mais là encore la force nécessaire pour arracher localement la rondelle est plus importante que celle qu'une ménagère peut développer habituellement avec ses doigts. En pratique, celle-ci va s'aider d'instruments qu'elle trouve à portée de la main (pinces, tournevis, lame de couteau, manche de cuillère, etc...) instruments qui ne sont pas adaptés à l'opération à réaliser et qui ont souvent pour résultat d'ébrécher et de rendre inutilisable le bocal en verre.

On a déjà proposé, pour pallier ces inconvénients, de ménager sur le joint une ligne de moindre résistance susceptible de se rompre par traction sur une partie extérieure de préhension. Dans une réalisation déjà envisagée par la Demanderesse, dans FR-A-1 217 209, la ligne de moindre résistance est une fente qui règne ou non sur la totalité de la largeur du joint. Une telle fente diminue nécessairement l'épaisseur du joint de sorte que peut se poser le problème de la résistance de celui-ci au cours de la stérilisation.

Dans une autre réalisation, telle que décrites par US-A-3 264 393, le joint comprend un corps sous forme d'une bande continue d'un matériau élastomère relié à une queue tangentielle sur un arc important de la circonférence du joint soit par un adhésif, soit par les propriétés de liaison inhérentes d'un matériau élastique. La fabrication d'un tel joint est relativement complexe et la présence d'un adhésif peut constituer un obstacle à l'utilisation du joint pour les stérilisations du type ménager.

La présente invention s'est essentiellement donné pour but de pourvoir à un joint d'étanchéité de bocaux de conserves ou récipients analogues qui réponde mieux aux nécessités de la pratique que les joints d'étanchéité connus, notamment en ce qu'il permet de rétablir la pression atmosphérique dans le bocal par introduction d'air dans ce dernier, sans requérir l'application d'un effort aussi important que par le passé, et sans avoir à utiliser, pour le faire, l'armature métallique, ce qui évite sa déformation. De plus, le joint d'étanchéité conforme à la présente invention est utilisable pour la stérilisation sur tous les bocaux ou analogues en verre, sans nécessiter de modifications ni des bocaux ni de leur couvercle, ni de l'armature métallique qui constitue leur système de fermeture, ni des méthodes de stérilisation.

Par rapport à l'état de la Technique reflété par le document US-A-3 264 393 qui décrit un procédé de production par extrusion de joints d'etanchéité pour bocaux de conserves et récipients analogues, notamment en verre, du type des rondelles en caoutchouc souple pourvues d'une projection latérale extérieure de préhension et d'une ligne de moindre résistance ménagée sur ledit joint entre la jonction de ladite projection avec la rondelle et la périphérie interne de cette dernière, la présente invention est caractérisée en ce que lesdits joints d'étanchéité sont produits par extrusion dans une filière à l'intérieur et au voisinage de la sortie de laquelle la rondelle en caoutchouc est, dans un premier temps, coupée en deux, en un emplacement et suivant une orientation appropriés, puis dans un second temps, se recolle immédiatement après l'opération de coupure avant sa sortie de la filière, pour former une ligne de moindre résistance dans la zone de la coupure.

La présente invention a en outre pour objet un dispositif de production de joints d'étanchéité présentant une ligne de moindre résistance, pour la mise en oeuvre du procédé qui consiste à extruder les rondelles et à les couper en un emplacement et suivant une orientation appropriés et provoquer leur auto-collage selon la ligne de coupure, lequel dispositif est caractérisé en ce qu'il comprend une filière associée à une lame, de préférence de faible épaisseur, laquelle lame est montée à l'intérieur de ladite filière, un peu en amont du plan de sortie de cette dernière.

Selon un mode de réalisation avantageux de ce dispositif, la lame est montée réglable pour permettre de l'éloigner ou de la rapprocher à volonté du plan de sortie de la filière.

La présente invention a également pour objet les joints d'étanchéité obtenus en mettant en oeuvre le procédé selon l'invention à l'aide du dispositif conforme à l'invention.

Un tel joint est d'épaisseur constante sur toute sa surface et est entièrement en caoutchouc, de sorte qu'il ne présente pas les inconvénients des dispositifs évoqués ci-dessus.

Outre les dispositions qui précèdent, l'invention comprend encore d'autres dispositions, qui ressortiront de la description qui va suivre.

L'invention sera mieux comprise à l'aide du complément de description qui va suivre qui se réfère aux dessins annexés dans lesquels:

- la figure 1 est une représentation schématique d'un mode de réalisation d'une projection latérale externe de préhension associée à une rondelle d'étanchéité conforme à la présente invention;
- la figure 2 représente une autre mode de réalisation d'une projection latérale externe de préhension associée à une rondelle d'étanchéité conforme à la présente invention;
- la figure 3 est une vue en coupe axiale d'un couvercle de bocal de conserves équipé d'un joint d'étanchéité conforme à la présente invention;
- la figure 4 est une vue axiale d'un dispositif d'extrusion pourvu d'une lame de coupe, conforme à l'invention, dont
- la figure 5 est une vue en coupe suivant V - V de la figure 4.

Il doit être bien entendu, toutefois, que ces dessins et les parties descriptives correspondantes, sont donnés uniquement à titre d'illustration de l'objet de l'invention, dont ils ne constituent en aucune manière une limitation.

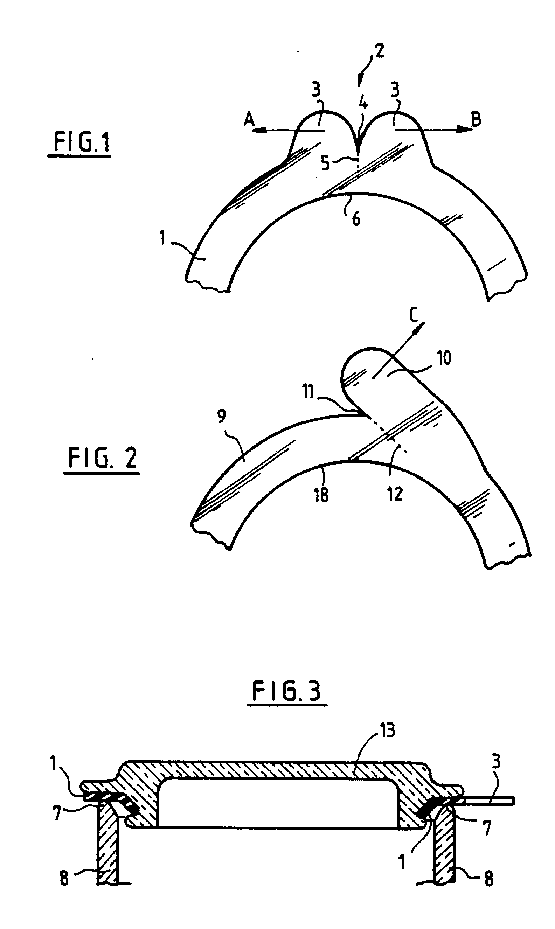

Le joint d'étanchéité représenté à la figure 1 comprend une rondelle 1 en caoutchouc souple, qui est pourvue d'une zone de préhension 2 qui se compose de deux projections latérales 3 au point de jonction 4 desquelles débute une ligne de moindre résistance 5, qui s'étend dudit point de jonction 4 à la périphérie interne 6 de ladite rondelle ou au voisinage de celle-ci. Les flèches A, B indiquent les deux directions suivant lesquelles l'opérateur doit exercer un effort de traction sur les projections 3 pour déchirer la rondelle 1 le long de la ligne de moindre résistance 5, lesquelles directions sont perpendiculaires à la ligne de moindre résistance 5.

Lorsque l'opérateur exerce son effort de traction manuel dans les directions indiquées par les flèches A, B, il déchire progressivement la rondelle 1 le long de la ligne de moindre résistance 5, en direction de l'intérieur; lorsque la déchirure a dépassé le rebord supérieur 7 du bocal 8, qui sert de surface d'appui à la rondelle d'étanchéité (cf fig. 3) l'air extérieur pénètre dans le bocal, dans lequel la pression atmosphérique est très rapidement rétablie, ce qui permet d'ouvrir le couvercle sans difficulté et sans effort.

Le joint d'étanchéité représenté à la figure 2 comprend une rondelle 9 en caoutchouc souple qui est pourvue d'une zone de préhension qui comprend une projection latérale 10. Au point de jonction 11 de cette projection 10 sur la rondelle 9 débute une ligne de moindre résistance 12 qui aboutit à proximité de la périphérie interne 18 de la rondelle 9 et dont l'orientation est telle qu'elle est perpendiculaire à la direction de la flèche C suivant laquelle l'opérateur doit exercer un effort de traction sur la projection 10 pour déchirer la rondelle 9 le long de la ligne de moindre résistance 12.

De la même manière que dans le cas du joint d'étanchéité représenté à la figure 1, lorsque la déchirure de la ligne 12 en direction de l'intérieur a dépassé le rebord supérieur 7 du bocal 8, l'air entre dans le bocal 8 et facilite l'ouverture du couvercle 13 sans effort.

La figure 2 illustre particulièrement clairement la relation qui existe entre la disposition de la ligne de moindre résistance perpendiculairement à la direction dans laquelle doit s'exercer l'effort de traction sur la projection, et la facilité de la déchirure.

La ligne de moindre résistance n'a aucune incidence sur l'étanchéité assurée par la rondelle, attendu qu'il n'y a pratiquement aucun risque de rupture de la rondelle au niveau de cette ligne de moindre résistance si elle n'est pas sollicitée par un effort de traction, ce qui exclut un risque de rupture au cours de la stérilisation: en effet, lorsque le couvercle est fermé, la rondelle de caoutchouc est soumise, entre le bocal 8 et le couvercle 13, à des forces de compression, qui ne sont pas de nature à déchirer la ligne de moindre résistance dont la déchirure ne peut se produire que sous l'action d'une force de traction.

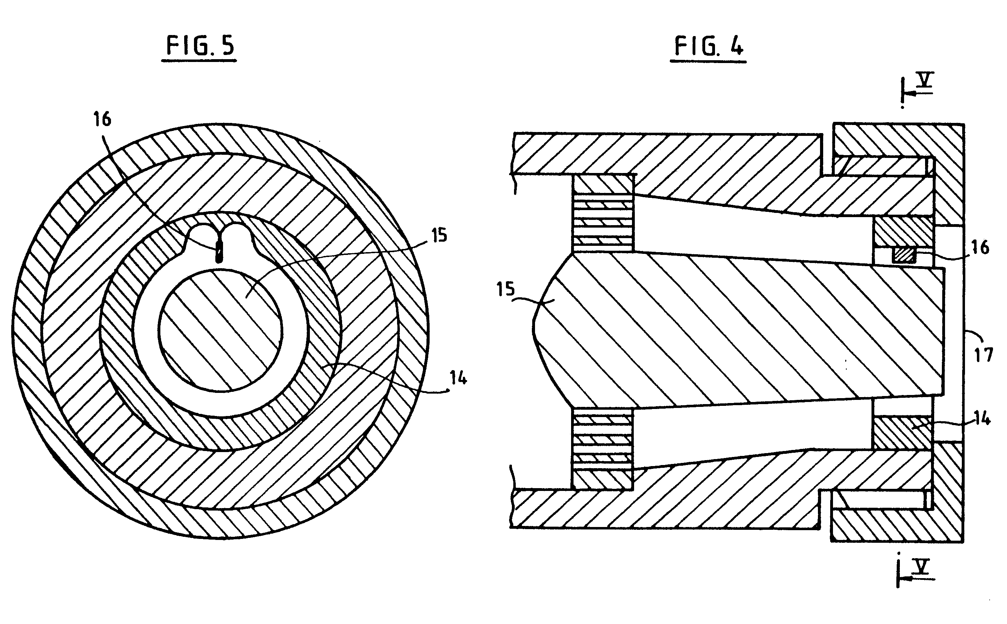

Les rondelles d'étanchéité de la présente invention sont en caoutchouc souple de type usuel, tel que caoutchouc naturel, caoutchouc SBR, etc... par exemple; elles sont produites par extrusion, les lignes de moindre résistance étant réalisées pendant le processus d'extrusion dans une extrudeuse unique du type de celle représentée schématiquement aux figures 4 et 5.

La tête d'extrudeuse représentée aux figures 4 et 5 comporte une filière 14 et un noyau 15 entre lesquels circule le caoutchouc cru.

Une lame relativement mince 16 est montée à l'intérieur de la filière 14, un peu en amont du plan de sortie 17 de cette dernière.

La lame 16 sépare la gomme de caoutchouc en deux, lorsque celle-ci passe devant elle, mais cette gomme se recolle immédiatement sur elle-même, dans la zone comprise entre la lame 16 et le plan de sortie 17 de la filière 14. Dans cette zone, la pression d'extrusion est faible, mais non nulle ce qui fait que dans la partie de la masse extrudée située dans le sillage de la lame 16, la résistance mécanique à la traction du caoutchouc vulcanisé sera moindre que dans le reste de la masse. A cet endroit en effet les chaînes de molécules composant le mélange de caoutchouc cru ont été rompues par la lame 16 et seulement partiellement recollées entre la lame 16 et le plan de sortie 17, créant ainsi la zone de faiblesse voulue par rapport au reste de la masse où aucune liaison n'a été interrompue.

Suivant une modalité avantageuse de l'invention, la lame 16 est montée réglable en position pour pouvoir être plus ou moins éloignée du plan de sortie 17 de la filière 14, ce qui permet de régler la pression à laquelle le caoutchouc cru est soumis pour se recoller sur lui-même et la durée pendant laquelle il est soumis à cette pression. Un tel réglage a une incidence directe sur la maîtrise de la valeur de la résistance à la traction du caoutchouc situé dans le sillage de la lame 16. C'est cette zone qui constitue, après la vulcanisation du caoutchouc, la ligne de moindre résistance à la déchirure recherchée.

## Revendications

1. Procédé de production de joints d'étanchéité pour bocaux de conserves et récipients analogues, notamment en verre, du type des rondelles en caoutchouc souple pourvues d'une projection latérale extérieure de préhension et d'une ligne de moindre résistance ménagée sur ledit joint entre la jonction de ladite projection avec la rondelle et la périphérie interne de cette dernière, caractérisé en ce que lesdits joints d'étanchéité sont produits par extrusion dans une filière (14) à l'intérieur et au voisinage de la sortie (17) de laquelle la rondelle en caoutchouc est, dans un premier temps, coupée en deux, en un emplacement et suivant une orientation appropriés puis, dans un deuxième temps, recollée immédiatement après l'opération de coupure avant sa sortie de la filière, pour former une ligne de moindre résistance dans la zone de la coupure.

2. Dispositif de production de joints d'étanchéité présentant une ligne de moindre résistance pour la mise en oeuvre du procédé selon la revendication 1, caractérisé en ce qu'il comprend une filière (14) associée à une lame (16), de préférence de faible épaisseur, laquelle lame (16) est montée à l'intérieur de ladite filière, un peu en amont du plan de sortie (17) de cette dernière.

3. Dispositif selon la revendication 2, caractérisé en ce que la lame (16) est montée réglable pour permettre de l'éloigner ou de la rapprocher à volonté du plan de sortie (17) de la filière (14).

## Patentansprüche

1. Verfahren zum Herstellen von Dichtungen für den dichten Abschluß für Konservengläser und ähnliche Behälter, insbesondere aus Glas, vom Typ der Unterlegscheiben aus weichem Kautschuk, die mit einem äußeren seitlichen Vorsprung für das Ergreifen und mit einer Linie geringeren Widerstands, welche an der Dichtung zwischen der Verbindung des Vorsprungs mit der Unterlegscheibe und dem inneren Umfang der letzteren angeordnet ist, versehen sind, dadurch gekennzeichnet, daß die Dichtungen für den dichten Abschluß durch Extrusion in einem Extrudermundstück (14) hergestellt werden, in dessen Inneren und in der Nachbarschaft des Ausgangs (17) desselben die Unterlegscheibe aus Kautschuk in einem ersten Arbeitstakt an einer Stelle und gemäß einer geeigneten Richtung durchgeschnitten wird, wonach in einem zweiten Arbeitstakt unmittelbar nach dem Vorgang der Einschnitt vor ihrem Austritt aus dem Extrudermundstück wiederzusammengeklebt wird, um eine Linie geringeren Widerstands in der Zone des Einschnitts auszubilden.

2. Vorrichtung zur Herstellung von Dichtungen für den dichten Abschluß, die eine Linie geringeren Widerstands aufweisen, für das Durchführen des Verfahrens nach dem Anspruch 1, dadurch gekennzeichnet, daß sie ein Extrudermundstück (14) umfaßt, das mit einem Plättchen (16), vorzugsweise von geringer Dicke, verbunden ist, welches Plättchen (16) im Inneren des Extrudermundstücks ein wenig flußaufwärts von der Austrittsebene (17) des letzteren angebracht ist.

3. Vorrichtung nach Anspruch 2, dadurch gekennzeichnet, daß das Plättchen (16) einstellbar angebracht ist, um es zu ermöglichen, es nach Wunsch von der Austrittsebene (17) des Extrudermundstücks (14) zu entfernen oder derselben näherzubringen.

## Claims

1. A method to produce sealing gaskets for jars and similar containers, especially those made of glass, of the type with flexible rubber washers provided with a gripping external side projection and a line of less resistance fitted onto said gasket between the junction of said projection with the washer and the internal periphery of the latter, characterized in that said sealing gaskets are produced by extrusion in a die (14) inside and close to the outlet (17) of which rubber washer is, firstly cut into two at a suitable location and along an appropriate orientation, and then secondly, is glued back together immediately after the cutting operation before it leaves the die in order to form a line of less resistance in the cutting zone.

2. A device for producing sealing gaskets having a line of less resistance for implementing the method as recited in claim 1, characterized in that it comprises a die (14) associated to a preferably thin blade or plate (16), said plate (16) being mounted inside said die slightly upstream of the outlet plane (17) of the latter.

3. A device as recited in claim 2, characterized in that the plate (16) is adjustable-mounted so as to enable it to be distanced from or brought close to the outlet plane (17) of the die (14).

FIG.1

FIG. 2

FIG.3

FIG. 5

FIG. 4

EP 0 209 454 B1